(19) Europäisches Patentamt European Patent Office Office européen des brevets

(11) **EP 4 657 026 A1**

(12) **EUROPÄISCHE PATENTANMELDUNG**

(43) Veröffentlichungstag:
**03.12.2025 Patentblatt 2025/49**

(51) Internationale Patentklassifikation (IPC):
**G01D 3/02** (2006.01)     **G01D 5/14** (2006.01)

(21) Anmeldenummer: **25173621.1**

(52) Gemeinsame Patentklassifikation (CPC):
**G01D 5/145; G01D 3/02**

(22) Anmeldetag: **30.04.2025**

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**GE KH LA MA MD TN**

(30) Priorität: **29.05.2024 DE 102024205005**

(71) Anmelder: **Robert Bosch GmbH**
**70442 Stuttgart (DE)**

(72) Erfinder:
• **Kovacs, Roland**
**1103 Budapest (HU)**
• **Szilagyi, Donat**
**1103 Budapest (HU)**

(54) **VORRICHTUNG ZUR ERFASSUNG EINER ROTATIONSEIGENSCHAFT EINES UM EINE ROTATIONSACHSE ROTIERENDEN OBJEKTS**

(57) Die Erfindung betrifft eine Vorrichtung zur Erfassung einer Rotationseigenschaft eines um eine Rotationsachse rotierenden Objekts, umfassend: einen um die Rotationsachse (10) drehbar gelagerten Magneten (1) mit einer die Rotationsachse (10) umlaufenden zylindermantelförmigen Umfangswand (11), wobei sich ein magnetischer Nordpol (N) und ein magnetischer Südpol (S) des Magneten (1) in Bezug auf die Rotationsachse (10) diametral gegenüberliegen, eine magnetfeldempfindliche Sensoreinrichtung (2), welche ausgebildet ist, das Magnetfeld des Magneten (1) bei einer Rotation des Magneten zu erfassen, und eine Auswerteschaltung (3), welche aus dem erfassten Magnetfeld die Rotationseigenschaft berechnet. Zur Eliminierung eines externen magnetischen Störfeldes wird vorgeschlagen, dass die die magnetfeldempfindliche Sensoreinrichtung (2) zwei jeweils Sensorelement (21; 22) aufweist, die jeweils sowohl eine Erfassung einer Magnetfeldkomponente ($B_{x1}$; $B_{x2}$) in einer x-Richtung als auch eine Erfassung einer Magnetfeldkomponente ($B_{y1}$; $B_{y2}$) in einer y-Richtung ermöglichen, wobei die Auswerteschaltung (3) dazu ausgebildet ist, einen ersten Differenzwert ($\Delta B_x$) aus den von den beiden Sensorelementen (21, 22) in der x-Richtung jeweils erfassten Magnetfeldkomponenten ($B_{x1}$, $B_{x2}$) und einen zweiten Differenzwert ($\Delta B_y$) aus den von den beiden Sensorelementen (21, 22) in der y-Richtung jeweils erfassten Magnetfeldkomponenten ($B_{y1}$, $B_{y2}$) zu berechnen.

Fig. 3

EP 4 657 026 A1

# EP 4 657 026 A1

**Beschreibung**

Stand der Technik

Im Stand der Technik sind zahlreiche Vorrichtungen zur Erfassung einer Rotationseigenschaft eines um eine Rotationsachse rotierenden Objekts bekannt, die insbesondere für die Automobilindustrie von Bedeutung sind und beispielsweise dazu dienen, die Drehzahl eines rotierenden Objekts wie der Ausgangswelle einer elektrischen Maschine zu erfassen. Einige der bekannten Vorrichtungen umfassen einen um die Rotationsachse drehbar gelagerten Magneten, der mit dem rotierenden Objekt koppelbar ist, eine magnetfeldempfindliche Sensoreinrichtung, welche das Magnetfeld des Magneten bei einer Rotation des Magneten erfasst, und eine Auswerteschaltung, welche aus dem erfassten Magnetfeld die Rotationseigenschaft berechnet. Die Magnete können insbesondere eine scheibenförmige oder ringscheibenförmige Geometrie mit einer die Rotationsachse umlaufenden, zylindermantelförmigen Umfangswand aufweisen, wobei sich ein magnetischer Nordpol und ein magnetischer Südpol des Magneten in Bezug auf die Rotationsachse diametral gegenüberliegen. Die Magnete sind dann diametral und nicht axial polarisiert. Derartige Vorrichtungen sind beispielsweise bekannt aus: "Sensoren im Kraftfahrzeug", 2. Ausgabe April 2007, Fachwissen Ffz-Technik, S. 133, IDBN-13 978-3-86522-021-9. Eine magnetfeldempfindliche Sensoreinrichtung kann grundsätzlich entweder auf der Rotationsachse und in axialer Richtung vor dem rotierenden Magneten (axiale Leserichtung) angeordnet werden oder in einer zu der Rotationsachse senkrechten radialen Richtung der Umfangswand gegenüberliegend angeordnet werden (radiale Leserichtung).

Eine wachsende technische Herausforderung besteht in der Immunität derartiger Vorrichtungen gegenüber magnetischen Streu- oder Störfeldeinflüssen, welche in der Automobiltechnik zunehmen. Derartige Streu- oder Störfeldeinflüsse können im ungünstigen Fall eine Fehlerfassung der Rotationsgröße und daher eine Fehlfunkton der gesamten Vorrichtung bewirken. Eine Immunisierung der Sensoreinrichtung gegen magnetische Streu- oder Störfeldeinflüsse ist daher von erheblicher Bedeutung. Im Falle der axialen Leserichtung der Vorrichtung ist dies wenig problematisch, da hier eine Immunität gegenüber Streu- oder Störfeldeinflüssen direkt durch den Sensor-ASICs erreicht werden kann. Im Unterschied dazu ist es ungleich schwieriger, das Problem für Vorrichtungen mit einer radialen Leserichtung durch eine einfache Maßnahme zu lösen. Gleichwohl sind Vorrichtung mit radialer Leserichtung interessant, da sie weniger axialen Bauraum benötigen und daher in vielen Anwendungsfällen platzsparender in ein elektrisches Antriebsaggregat, insbesondere eine E-Achse integriert werden können.

Offenbarung der Erfindung

Die Erfindung betrifft eine Vorrichtung zur Erfassung einer Rotationseigenschaft eines um eine Rotationsachse rotierenden Objekts, umfassend:

- einen um die Rotationsachse drehbar gelagerten Magneten mit einer die Rotationsachse umlaufenden, zylindermantelförmigen Umfangswand, wobei sich ein magnetischer Nordpol und ein magnetischer Südpol des Magneten in Bezug auf die Rotationsachse diametral gegenüberliegen,
- eine magnetfeldempfindliche Sensoreinrichtung, welche ausgebildet ist, um das Magnetfeld des Magneten bei einer Rotation des Magneten zu erfassen und
- eine Auswerteschaltung, welche aus dem erfassten Magnetfeld die Rotationseigenschaft berechnet. Erfindungsgemäß wird vorgeschlagen, dass die magnetfeldempfindliche Sensoreinrichtung in einer zu der Rotationsachse senkrechten radialen Richtung der Umfangswand gegenüberliegend angeordnet ist, wobei die magnetfeldempfindliche Sensoreinrichtung zwei Sensorelemente aufweist, wobei die beiden Sensorelemente in einem Abstand zueinander angeordnet sind und den gleichen radialen Abstand zu der Rotationsachse aufweisen, wobei eine Verbindungslinie der beiden Sensorelemente senkrecht zu der Rotationsachse verläuft und eine x-Richtung definiert, wobei eine zu der Rotationachse parallele Achse eine y-Richtung definiert, wobei jedes der beiden Sensorelemente als zweidimensionales Sensorelement ausgebildet ist, das sowohl eine Erfassung einer Magnetfeldkomponente in der x-Richtung als auch eine Erfassung einer Magnetfeldkomponente in der y-Richtung ermöglicht, wobei die Auswerteschaltung dazu ausgebildet ist, einen ersten Differenzwert aus den von den beiden Sensorelementen in der x-Richtung jeweils erfassten Magnetfeldkomponenten und einen zweiten Differenzwert aus den von den beiden Sensorelementen in der y-Richtung jeweils erfassten Magnetfeldkomponenten zu berechnen.

Im Kontext der vorliegenden Anmeldung wird ein magnetischer Streu- oder Störfeldeinfluss als jede Magnetfeldstärke angesehen, die ihren Ursprung nicht in dem Magneten der Vorrichtung, sondern in einer externen Magnetfeldquelle hat.

Unter einem zweidimensionalen Sensorelement wird ein einzelnes Sensorelement verstanden, welches am Ort des Sensorelementes eine Magnetfelderfassung in zwei von drei Raumrichtungen ermöglicht. Derartige Sensorelemente können beispielsweise als Hall-Sensorelement oder magnetoresistive Sensorelemente ausgebildet sein. Im Falle von Hall-Sensoren werden diese auch als "2D-Hall-Sensoren" bezeichnet.

Es bestehen unterschiedliche Möglichkeiten, einen um eine Rotationsachse beziehungsweise Drehachse rotierenden Magneten der Vorrichtung mit dem rotierenden Objekt, dessen Rotationsgröße erfasst werden soll, zu koppeln. In einem einfachen Fall kann das Objekt eine rotierende Welle und der Magnet direkt auf der Welle gelagert sein, so dass die Rotationsachse des Magneten mit der Drehachse der Welle zusammenfällt.

Die magnetfeldempfindliche Sensoreinrichtung ist erfindungsgemäß in einer zu der Rotationsachse senkrechten radialen Richtung der Umfangswand gegenüberliegend angeordnet, so dass erfindungsgemäß die radiale Leserichtung vorliegt, bei der eine zu der Rotationsachse senkrechte Achse durch die Sensoreinrichtung verläuft.

Vorteile der Erfindung

Die Erfindung ermöglicht vorteilhaft, eine Vorrichtung zur Erfassung einer Rotationseigenschaft eines um eine Rotationsachse rotierenden Objekts mit einem Magneten und einer relativ zu dem Magneten in radialer Leserichtung angeordneten Sensoreinrichtung bereitzustellen, welche magnetische Streu- oder Störfeldeinfluss weitgehend eliminiert. Um dies zu erreichen, sind zwei spezielle Sensorelemente der Sensoreinrichtung vorgesehen, welche in einem Abstand zueinander und im gleichen radialen Abstand zu der Rotationsachse angeordnet sind. Eine Verbindungslinie der beiden Sensorelemente verläuft senkrecht zu der Rotationsachse und definiert eine x-Richtung. Eine zu der Rotationachse parallele Achse auf der Ebene der Sensorelemente definiert eine y-Richtung. Jedes der beiden Sensorelemente ist als zweidimensionales Sensorelement ausgebildet, das sowohl eine Erfassung einer Magnetfeldkomponente in der x-Richtung als auch eine Erfassung einer Magnetfeldkomponente in der y-Richtung ermöglicht. Dadurch, dass die Auswerteschaltung erfindungsgemäß einen ersten Differenzwert aus den von den beiden Sensorelementen in der x-Richtung jeweils erfassten Magnetfeldkomponenten und einen zweiten Differenzwert aus den von den beiden Sensorelementen in der y-Richtung jeweils erfassten Magnetfeldkomponenten berechnet, wird vorteilhaft der Einfluss von magnetischen Streu- oder Störfeldern sowohl in der x-Richtung wie auch in der y-Richtung aufgrund der jeweiligen Differenzwertbildung vollständig eliminiert.

Vorteilhafte Ausgestaltungen und Weiterbildungen der Erfindung ermöglichen die in den abhängigen Ansprüchen enthaltenen Merkmale.

Besonders vorteilhaft ist ein Ausführungsbeispiel, bei dem die Auswerteschaltung die Rotationseigenschaft aus einem Quotienten des ersten Differenzwertes und des zweiten Differenzwertes berechnet. Wenn die Rotationseigenschaft beispielsweise der Rotationswinkel eines um die Rotationsachse rotierenden Objektes ist, kann die Auswerteschaltung den Rotationswinkel aus dem Quotienten des ersten Differenzwertes und des zweiten Differenzwertes durch eine einfache Berechnung des Arkustangens (atan oder arctan) oder einer erweiterten Arkustangensbeziehung (atan2 oder arctan2) berechnen.

Die erweiterte Arkustangensbeziehung atan2 oder arctan2 definiert eine Erweiterung der inversen Winkelfunktion Arkustangens und ist wie diese eine Umkehrfunktion der Winkelfunktion des Tangens, welche zwei reelle Zahlen als Argumente verwendet, im Unterschied zur normalen Arkustangensfunktion, welcher nur eine reelle Zahl zum Argument hat. Die atan2- oder arctan2-Funktion kann einen Funktionswert in einem Wertebereich von 360° ausgeben und ist daher nicht wie die arctan-Funktion auf den Winkelbereich von -90° bis 90° beschränkt.

Vorteilhaft ist es möglich, dass der erste Differenzwert und der zweite Differenzwert phasenverschoben insbesondere um etwa 90° phasenverschoben sind. Dadurch besteht zwischen den in der x-Richtung erfassten Magnetfeldkomponenten und den in der y-Richtung erfassten Magnetfeldkomponenten eine Sinus-Cosinus-Beziehung.

Besonders vorteilhaft kann die Sensoreinrichtung als ein integriertes ASIC-Bauelement ausgebildet sein, wobei die beiden Sensorelemente in das ASIC-Bauelement integriert sind. Es muss also nur ein Sensorbauelement vorgesehen werden, welches beispielweise auf eine Leiterplatte bestückt werden kann. Die Leiterplatte kann weiterhin vorteilhaft einen die Auswerteschaltung beinhaltenden Mikrocontroller aufweisen, der beispielsweise über Leiterbahnen der Leiterplatte an das ASIC-Bauelement elektrische angebunden ist.

Der Magnet weist eine zylindermantelförmige Umfangswand auf. Der Magnet kann beispielsweise scheibenförmig aufgebaut sein und weist dann zwei voneinander abgewandten Kreisflächen und die zylindermantelförmige Umfangswand auf. Es ist aber auch möglich, dass der Magnet ringscheibenförmig aufgebaut ist und eine innere zylindrische Durchgangsausnehmung aufweist, in welche beispielsweise eine Welle eingeführt werden kann. Der Magnet weist vorzugweise genau einen Nordpol und genau einen Südpol auf, die sich in Bezug auf die Rotationsachse diametral gegenüberliegen.

Kurze Beschreibung der Zeichnungen

Nachfolgend werden mögliche Ausführungsformen der Erfindung unter Bezugnahme auf die beiliegenden Figuren erläutert. In der Zeichnung zeigen:

Figur 1    ein erstes Ausführungsbeispiel eines Aufbaus einer erfindungsgemäßen Vorrichtung,

Figur 2    ein zweites Ausführungsbeispiel eines Aufbaus einer erfindungsgemäßen Vorrichtung

Figur 3    eine Frontalansicht eines weiteren Ausführungsbeispiels der Erfindung,

Figur 4    eine Seitenansicht des Ausführungsbeispiels aus Figur 3,

Figur 5    einen Verlauf des ersten Differenzwerts $\Delta B_x$ und des zweiten Differenzwerts $\Delta B_y$ über dem Drehwinkel des Magneten,

Figur 6    einen gemessenen Drehwinkel im Vergleich zum nominalen Drehwinkel.

Ausführungsformen der Erfindung

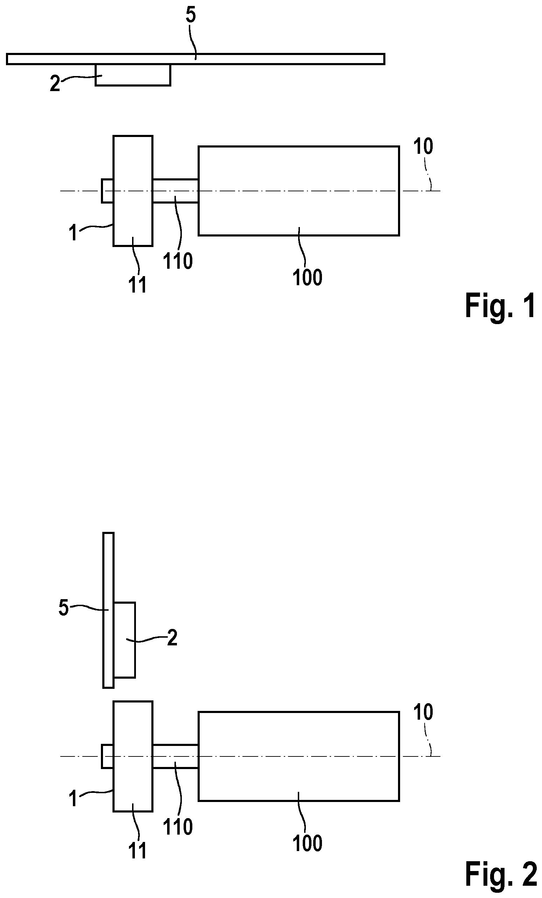

Figur 1 zeigt ein erstes Ausführungsbeispiel eines Aufbaus einer erfindungsgemäßen Vorrichtung zur Erfassung einer Rotationseigenschaft eines um eine Rotationsachse rotierenden Objekts, bei dem es sich beispielsweise um die Ausgangswelle 110 einer elektrischen Maschine 100 handelt, welche um eine Rotationsachse 10 rotiert. Mit der Welle 110 ist ein Magnet 1 drehfest verbunden, so dass der Magnet 1 zusammen mit der Welle 110 um die Rotationsachse 10 rotiert. Der Magnet 1 weist eine die Rotationsachse 10 umlaufende zylindermantelförmige Umfangswand 11 auf. Die Vorrichtung umfasst weiterhin eine Sensoreinrichtung 2, welche in einer zu der Rotationsachse 10 senkrechten und daher radialen Richtung der Umfangswand 11 gegenüberliegend angeordnet ist, so dass eine radiale Leserichtung vorliegt. Die Sensoreinrichtung 2 kann auf einer Leiterplatte 5 angeordnet sein, welche in dem Ausführungsbeispiel der Figur 1 parallel zu der Leiterplatte 5 angeordnet ist.

Figur 2 zeigt ein zweites Ausführungsbeispiel eines Aufbaus einer erfindungsgemäßen Vorrichtung. Im Unterschied zu dem Ausführungsbeispiel der Figur 1 ist in der Figur 2 die Leiterplatte 5 senkrecht zu der Rotationsachse 10 angeordnet. Auch in diesem Ausführungsbeispiel ist die Sensoreinrichtung 2 in einer zu der Rotationsachse 10 senkrechten radialen Richtung der Umfangswand 11 gegenüberliegend angeordnet, so dass eine radiale Leseeinrichtung vorliegt.

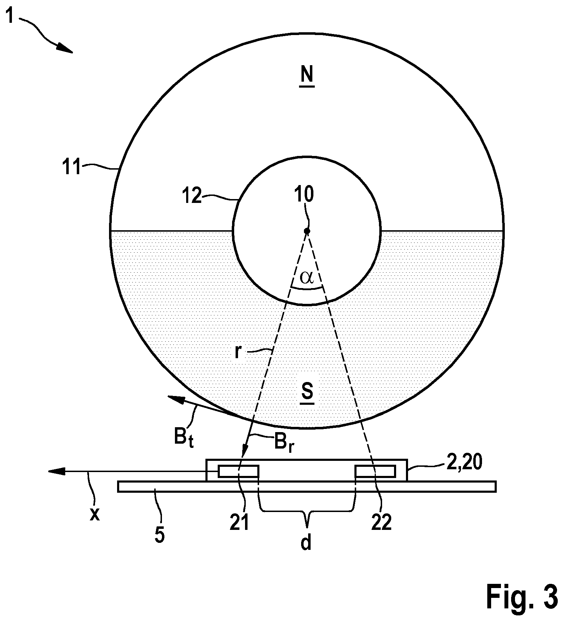

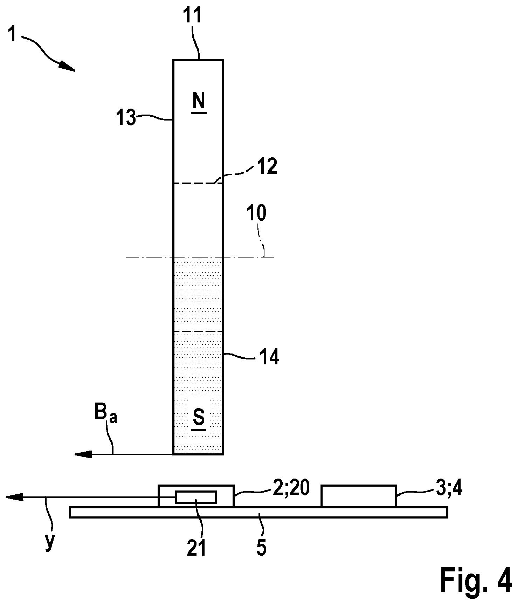

Figur 3 und Figur 4 zeigen ein detaillierteres Ausführungsbeispiel mit einem Aufbau ähnlich zur Figur 1. Die Blickrichtung in Figur 3 ist senkrecht auf den Magneten 1 gerichtet und verläuft in Richtung der Rotationsachse 10 des Magneten 1 und daher in y-Richtung. Figur 4 zeigt eine dazu senkrechte Blickrichtung in der x-Richtung, welche auf die umlaufende Umfangswand 11 des Magneten 1 gerichtet ist.

Man erkennt in Figur 3 und 4, dass der Magnet 1 in diesem Ausführungsbeispiel ringscheibenförmig ausgebildet ist und beispielsweise zwei voneinander abgewandte, ringkreisförmige Außenfläche 13, 14, sowie eine umlaufende zylindermantelförmige Umfangswand 11 und eine zentrische Innenausnehmung 12 aufweist. Der Magnet 1 weist genau einen Nordpol N und einen Südpol S auf. Der Nordpol N liegt dem Südpol S in Bezug auf die Rotationsachse 10 diametral gegenüber. Anders ausgedrückt: eine durch die Rotationsachse 10 verlaufende Ebene, welche senkrecht zur Figur 3 orientiert ist, unterteilt den Magneten 1 hälftig in einen Nordpol N und einen Südpol S.

Weiterhin ist eine magnetfeldempfindliche Sensoreinrichtung 2 vorgesehen. Wie am besten in Figur 3 zu erkennen ist, weist die Sensoreinrichtung 2 ein erstes magnetfeldempfindliches Sensorelement 21 und ein zweites magnetfeldempfindliches Sensorelement 22 auf. Die beiden Sensorelemente 21, 22 sind in einem Abstand d zueinander angeordnet und weisen den gleichen radialen Abstand r zu der Rotationsachse 10 auf. Eine Verbindungslinie der beiden Sensorelemente 21, 22 verläuft daher senkrecht zu der Rotationsachse 10 und definiert eine x-Richtung. Eine dazu senkrechte Richtung, welche parallel zu der Rotationsachse 10 verläuft, definiert eine y-Richtung und ist in Figur 4 dargestellt.

Die Größe und Ausrichtung des magnetischen Feldes des Magneten 1 richtet sich nach dem Verlauf der magnetischen Flussdichte B, welche eine Vektorgröße ist. Ausgehend von einem Punkt auf der Umfangswand 11 des Magneten 1, weist jeder Vektor der magnetischen Flussdichte B eine radiale Komponente $B_r$, eine tangentiale Komponente $B_t$ und eine axiale Komponente $B_a$ auf, wobei die radiale Komponente $B_r$ und die tangentiale Komponente $B_t$ in Figur 3 und die axiale Komponente in Figur 4 zu erkennen sind.

Da die beiden Sensorelemente 21 und 22 in einem Abstand d zueinander in der x-Richtung angeordnet sind, kann ein Winkel $\alpha$ dadurch definiert werden, dass seine beiden Schenkel mittig jeweils durch das erste Sensorelemente 21 und das zweite Sensorelemente 22 verlaufen und der Scheitelpunkt des Winkels $\alpha$ auf der Rotationsachse 10 angeordnet ist. Der Winkel $\alpha$ beträgt beispielsweise 30°.

Jedes der beiden Sensorelemente 21, 22 ist als zweidimensionales Sensorelement, beispielsweise als 2D-Hallsensorelement ausgebildet, welches eine Erfassung der magnetischen Flussdichte sowohl in der x-Richtung als auch in der y-Richtung am Ort des jeweiligen Sensorelementes ermöglicht. Das erste Sensorelement 21 ermöglicht also am Ort des ersten Sensorelements die Erfassung einer ersten Magnetfeldkomponente $B_{x1}$ in der x-Richtung und die Erfassung einer zweiten Magnetfeldkomponente $B_{y1}$ in der y-Richtung. Das zweite Sensorelement 22 ermöglicht am Ort des zweiten Sensorelementes die Erfassung einer ersten Magnetfeldkomponente $B_{x2}$ in der x-Richtung und die Erfassung einer zweiten Magnetfeldkomponente $B_{y2}$ in der y-Richtung.

Die radiale Komponente $B_r$ und die tangentiale Komponente $B_t$ der magnetischen Flussdichte B können durch einfache geometrische Überlegungen unter Ausnutzung der durch den Winkel $\alpha$ gegebenen Beziehung auf die x-Achse projiziert werden. So gilt beispielsweise für die durch das erste Sensorelement 21 in der x-Richtung erfasste erste Magnetfeldkomponente $B_{x1}$:

$$B_{x1} = B_{t1} * \cos\left(\frac{\alpha}{2}\right) + B_{r1} * \sin\left(\frac{\alpha}{2}\right) \ ,$$

wobei $B_{t1}$ die tangentiale Komponente und $B_{r1}$ die radiale Komponente der magnetischen Flussdichte ist. Entsprechend gilt für die durch das zweite Sensorelement 22 in der x-Richtung erfasste erste Magnetfeldkomponente $B_{x2}$:

$$B_{x2} = B_{t2} * \cos\left(\frac{\alpha}{2}\right) + B_{r2} * \sin\left(\frac{\alpha}{2}\right)$$

Da wie in Figur 4 dargestellt ist, die Umfangswand 11 des Magneten 1 dem ersten Sensorelement 21 parallel gegenüberliegt, gilt für die durch das erste Sensorelement 21 in der y-Richtung erfasste zweite Magnetfeldkomponente $B_{y1}$:

$$B_{y1} = B_{a1} \ ,$$

wobei $B_{a1}$ die axiale Komponente der von dem ersten Sensorelement 21 erfassten magnetischen Flussdichte ist.

Entsprechend gilt für die die durch das zweite Sensorelement 22 in der y-Richtung erfasste zweite Magnetfeldkomponente $B_{y2}$:

$$B_{y2} = B_{a2}$$

Die beiden Sensorelemente 21 und 22 können, wie in Figur 3 dargestellt ist, in einem gemeinsamen ASIC-Bauelemente 20 integriert sein, was aber nicht zwingend erforderlich ist. Das ASIC-Bauelement 20 kann zusammen mit einem Mikrocontroller 4 auf eine Leiterplatte 5 bestückt sein und über Leiterbahnen der Leiterplatte 5 mit diesem elektrisch verbunden sein. Der Mikrocontroller 4 weist eine Auswerteschaltung 3 auf.

Die Auswerteschaltung 3 ist erfindungsgemäß dazu ausgebildet, einen ersten Differenzwert $\Delta B_x$ aus den von den beiden Sensorelementen 21, 22 in der x-Richtung jeweils erfassten Magnetfeldkomponenten $B_{x1}$, $B_{x2}$ und einen zweiten Differenzwert $\Delta B_y$ aus den von den beiden Sensorelementen 21, 22 in der y-Richtung jeweils erfassten Magnetfeldkomponenten $B_{y1}$, $B_{y2}$ zu berechnen. Es gilt also:

$$\Delta B_x = B_{x1} - B_{x2} \qquad \text{und} \qquad \Delta B_y = B_{y1} - B_{y2}.$$

Bei dieser Vorgehensweise wird der Einfluss eines magnetischen Streu- oder Störfeldes vorteilhaft eliminiert, denn im Falle der Anwesenheit eines in x-Richtung wirkenden Streu- oder Störfeldes $B_S$ ändert sich die obige Gleichung zu:

$$\Delta B_x = (B_{x1} + B_S) - (B_{x2} + B_S) = B_{x1} - B_{x2} \ ,$$

und der Sachverhalt bleibt daher unverändert.

Da das Streu- oder Störfeldes aufgrund der räumlichen Nähe der beiden Sensorelemente 21 und 22 gleichartig auf diese Sensorelemente wirkt, führt die Differenzbildung dazu, dass der Einfluss des Streu- oder Störfeldes herausgerechnet werden kann. Ebenso wird der Einfluss eines in y-Richtung wirkenden Streu- oder Störfeldes durch die Bildung des Differenzwertes $\Delta B_y$ eliminiert.

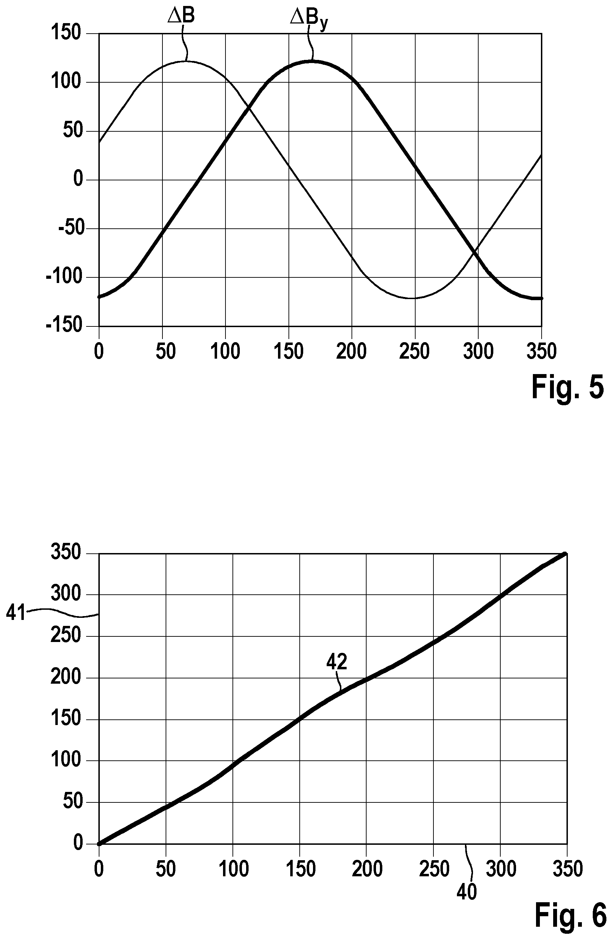

Die Figur 5 zeigt den Verlauf des ersten Differenzwertes $\Delta B_x$ und des zweiten Differenzwertes $\Delta B_y$ über dem Drehwinkel $\varphi$ des Magneten 1, bei einer Rotation desselben, für das Ausführungsbeispiel aus Figur 3 und 4. Auf der Ordinate ist die Größe der magnetischen Flussdichte in mT aufgetragen. Man erkennt, dass der erste Differenzwert $\Delta B_x$ und der zweite Differenzwertes $\Delta B_y$ in einer Sinus-Cosinus-Beziehung zueinanderstehen und der zweite Differenzwertes

$\Delta B_y$ um etwa 90° gegenüber dem ersten Differenzwert phasenversetzt ist.

Ist die von der Vorrichtung zu erfassende Rotationseigenschaft der Rotationswinkel φ beziehungsweise der Drehwinkel des Magneten 1, so kann die Auswerteschaltung 3 den Rotationswinkel φ in einfacher Weise aus dem Quotienten des ersten Differenzwertes ∆Bx und des zweiten Differenzwertes ∆By insbesondere aus einer Arkustangens Beziehung oder einer erweiterten Arkustangensbeziehung berechnet:

$$\varphi = atan_2(\frac{\Delta B_x}{\Delta B_y})$$

Das Ergebnis dieser Berechnung ist in Figur 6 durch den Verlauf der Kurve 42 dargestellt, wobei auf der Abszisse 40 der nominale Drehwinkel beziehungsweise Rotationswinkel und auf der Ordinate 41 ein nach der obigen Beziehung berechneter Rotationswinkel φ aufgetragen ist. Man erkennt eine sehr gute Übereinstimmung, wobei die noch vorhandenen Abweichungen von der Linearität in einfacher Weise durch eine entsprechende Korrekturrechnung und Glättung der Kurve beispielsweise in einem Steuergerät korrigiert werden können.

**Patentansprüche**

1. Vorrichtung zur Erfassung einer Rotationseigenschaft eines um eine Rotationsachse rotierenden Objekts, umfassend:

   - einen um die Rotationsachse (10) drehbar gelagerten Magneten (1) mit einer die Rotationsachse (10) umlaufenden, zylindermantelförmigen Umfangswand (11), wobei sich ein magnetischer Nordpol (N) und ein magnetischer Südpol (S) des Magneten (1) in Bezug auf die Rotationsachse (10) diametral gegenüberliegen,
   - eine magnetfeldempfindliche Sensoreinrichtung (2), welche ausgebildet ist, um das Magnetfeld des Magneten (1) bei einer Rotation des Magneten zu erfassen und
   - eine Auswerteschaltung (3), welche aus dem erfassten Magnetfeld die Rotationseigenschaft berechnet, **dadurch gekennzeichnet, dass** die magnetfeldempfindliche Sensoreinrichtung (2) in einer zu der Rotationsachse (10) senkrechten radialen Richtung der Umfangswand (11) gegenüberliegend angeordnet ist, wobei die magnetfeldempfindliche Sensoreinrichtung (2) zwei Sensorelemente (21, 22) aufweist, wobei die beiden Sensorelemente (21, 22) in einem Abstand (d) zueinander angeordnet sind und den gleichen radialen Abstand zu der Rotationsachse (10) aufweisen, wobei eine Verbindungslinie der beiden Sensorelemente (21, 22) senkrecht zu der Rotationsachse (10) verläuft und eine x-Richtung (x) definiert, wobei eine zu der Rotationachse (10) parallele Achse eine y-Richtung (y) definiert, wobei jedes der beiden Sensorelemente (21, 22) als zweidimensionales Sensorelement ausgebildet ist, das sowohl eine Erfassung einer Magnetfeldkomponente ($B_{x1}$; $B_{x2}$) in der x-Richtung als auch eine Erfassung einer Magnetfeldkomponente ($B_{y1}$; $B_{y2}$) in der y-Richtung ermöglicht, wobei die Auswerteschaltung (3) dazu ausgebildet ist, einen ersten Differenzwert ($\Delta B_x$) aus den von den beiden Sensorelementen (21, 22) in der x-Richtung jeweils erfassten Magnetfeldkomponenten ($B_{x1}$, $B_{x2}$) und einen zweiten Differenzwert ($\Delta B_y$) aus den von den beiden Sensorelementen (21, 22) in der y-Richtung jeweils erfassten Magnetfeldkomponenten ($B_{y1}$, $B_{y2}$) zu berechnen.

2. Vorrichtung nach Anspruch 1, **dadurch gekennzeichnet, dass** die Auswerteschaltung (3) die Rotationseigenschaft aus einem Quotienten des ersten Differenzwertes ($\Delta B_x$) und des zweiten Differenzwertes ($\Delta B_y$) berechnet.

3. Vorrichtung nach Anspruch 1, **dadurch gekennzeichnet, dass** der erste Differenzwert ($\Delta B_x$) und der zweite Differenzwert ($\Delta B_y$) phasenverschoben sind, insbesondere um 90° phasenverschoben sind.

4. Vorrichtung nach Anspruch 2, **dadurch gekennzeichnet, dass** die Rotationseigenschaft der Rotationswinkel ($\varphi$) ist und dass die Auswerteschaltung den Rotationswinkel ($\varphi$) aus dem Quotienten des ersten Differenzwertes ($\Delta B_x$) und des zweiten Differenzwertes ($\Delta B_y$) insbesondere mittels einer Arkustangens Beziehung oder einer erweiterten Arkustangensbeziehung berechnet.

5. Vorrichtung nach einem der Ansprüche 1 bis 4, **dadurch gekennzeichnet, dass** die beiden Sensorelemente (21, 22) als zweidimensionale Hallsensorelemente oder als zweidimensionale magnetoresistive Sensorelemente ausgebildet sind.

6. Vorrichtung nach einem der vorstehenden Ansprüche, **dadurch gekennzeichnet, dass** die Sensoreinrichtung (2) als ASIC-Bauelement (20) ausgebildet ist und dass die beiden Sensorelemente (21, 22) in das ASIC-Bauelement (20) integriert sind.

7. Vorrichtung nach Anspruch 6, **dadurch gekennzeichnet, dass** die Vorrichtung eine Leiterplatte (5) aufweist auf der ein die Auswerteschaltung (3) beinhaltender Mikrocontroller (4) und eine mit dem Mikrocontroller (4) verbundenes ASIC-Bauelement (20) bestückt sind.

8. Vorrichtung nach einem der vorstehenden Ansprüche, **dadurch gekennzeichnet, dass** der Magnet (1) scheibenförmig oder ringscheibenförmig mit genau einem Nordpol (N) und genau einem Südpol (S) ausgebildet ist.

Fig. 1

Fig. 2

Fig. 3

1

11

N

13

12

10

14

$B_a$

S

2;20

3;4

y

21

5

Fig. 4

Fig. 5

Fig. 6

Europäisches
Patentamt

European
Patent Office

Office européen
des brevets

**EUROPÄISCHER RECHERCHENBERICHT**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 10 2018 220667 A1 (ZAHNRADFABRIK FRIEDRICHSHAFEN [DE]) 4. Juni 2020 (2020-06-04) * Abbildung 1 * * Absätze [0014], [0020] - [0022], [0036] - [0038], [0047] - [0054] * ----- | 1-8 | INV. G01D3/02 G01D5/14 |
| X | DE 698 27 818 T2 (YASKAWA DENKI KITAKYUSHU KK [JP]) 21. April 2005 (2005-04-21) * Abbildungen 1, 2, 5 * ----- | 1-8 | |
| X | US 2022/075008 A1 (ROMERO HERNÁN D [AR]) 10. März 2022 (2022-03-10) * Abbildung 1A * * Absätze [0004], [0036] - [0038] * ----- | 1-8 | |
| A | CN 114 440 937 A (INFINEON SCIENCE AND TECH CO LTD) 6. Mai 2022 (2022-05-06) * Abbildungen 1-4 * * Absätze [0003], [0020], [0027], [0047], [0051] * ----- | 1-8 | |
| | | | RECHERCHIERTE SACHGEBIETE (IPC) |
| A | DE 10 2007 018238 A1 (BOSCH GMBH ROBERT [DE]) 23. Oktober 2008 (2008-10-23) * Abbildung 2A * * Anspruch 2 * * Absatz [0010] * ----- | 1-8 | G01D |
| A | DE 10 2014 109950 A1 (INFINEON TECHNOLOGIES AG [DE]) 22. Januar 2015 (2015-01-22) * Abbildung 1B * * Absatz [0006] * ----- | 1-8 | |
| A | DE 10 2017 128869 B3 (INFINEON TECHNOLOGIES AG [DE]) 29. Mai 2019 (2019-05-29) * Abbildungen 1, 2, 7 * ----- | 1-8 | |

Der vorliegende Recherchenbericht wurde für alle Patentansprüche erstellt

| Recherchenort | Abschlußdatum der Recherche | Prüfer |
|---|---|---|
| München | 17. Oktober 2025 | Kuchenbecker, J |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
...............................................................................
& : Mitglied der gleichen Patentfamilie, übereinstimmendes Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 25 17 3621

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

17-10-2025

| Im Recherchenbericht angeführtes Patentdokument | Datum der Veröffentlichung | Mitglied(er) der Patentfamilie | Datum der Veröffentlichung |
|---|---|---|---|
| DE 102018220667 A1 | 04-06-2020 | CN 113227715 A<br>DE 102018220667 A1<br>EP 3887764 A1<br>US 2022034644 A1<br>WO 2020109383 A1 | 06-08-2021<br>04-06-2020<br>06-10-2021<br>03-02-2022<br>04-06-2020 |
| DE 69827818 T2 | 21-04-2005 | CN 1271416 A<br>DE 69827818 T2<br>EP 1014039 A1<br>KR 20010023605 A<br>US 6762897 B1<br>WO 9913296 A1 | 25-10-2000<br>21-04-2005<br>28-06-2000<br>26-03-2001<br>13-07-2004<br>18-03-1999 |
| US 2022075008 A1 | 10-03-2022 | KEINE | |
| CN 114440937 A | 06-05-2022 | KEINE | |
| DE 102007018238 A1 | 23-10-2008 | DE 102007018238 A1<br>EP 2137498 A2<br>WO 2008128857 A2 | 23-10-2008<br>30-12-2009<br>30-10-2008 |
| DE 102014109950 A1 | 22-01-2015 | DE 102014109950 A1<br>US 2015022186 A1<br>US 2018259361 A1 | 22-01-2015<br>22-01-2015<br>13-09-2018 |
| DE 102017128869 B3 | 29-05-2019 | CN 109990697 A<br>DE 102017128869 B3<br>US 2019170497 A1 | 09-07-2019<br>29-05-2019<br>06-06-2019 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- Sensoren im Kraftfahrzeug. Fachwissen Ffz-Technik, April 2007, 133